# EUROPÄISCHE PATENTSCHRIFT

(11) **EP 2 829 208 B1**
(45) Veröffentlichungstag und Bekanntmachung des Hinweises auf die Patenterteilung: **26.04.2017**
(21) Anmeldenummer: 13450034.7
(22) Anmeldetag: 26.07.2013
(51) Int. Cl.: A47J 42/00, A47J 42/38

(54) **Gewürzmühle**
Spice grinder
Moulin à épices

(43) Veröffentlichungstag der Anmeldung: 28.01.2015
(73) Patentinhaber: Joma Kunststofftechnik GmbH & Co. KG, 2345 Brunn am Gebirge (AT)
(72) Erfinder: Burger, Josef, 3720 Ravelsbach (AT)
(74) Vertreter: Sonn & Partner Patentanwälte

(56) Entgegenhaltungen:
- WO-A1-2011/067736
- WO-A1-2012/073092
- CH-A1- 703 351

## Beschreibung

Die Erfindung bezieht sich auf eine Gewürzmühle, die auf ein das Gewürz enthaltendes Glas aufzuschrauben ist, wobei das Glas mindestens einen nach außen ragenden Vorsprung aufweist, der mit einem an dem aufzuschraubenden Teil der Gewürzmühle nach innen ragenden Vorsprung derart zusammenwirkt, dass nach dem Bewegen der beiden Vorsprünge aneinander vorbei beim Aufschrauben der Gewürzmühle auf das Glas ein Rückdrehen gesperrt ist.
Eine derartige Gewürzmühle ist aus der WO 2011/067736 A1 bekannt.

Es ist in vielen Fällen erwünscht bzw. sogar notwendig, einen mit einem Schraubverschluß versehenen Behälter so zu verschließen, dass der Behälter durch Zurückdrehen des Schraubverschlusses nicht mehr geöffnet werden kann. Dies trifft auch auf Gewürzbehälter zu, die im Normalfall aus Glas bestehen und auf die eine Gewürzmühle aufgesetzt ist. Solche Einheiten Glas-Gewürzmühle sind Einwegartikel und es ist nicht erwünscht, dass sie vom Verbraucher neu befüllt werden.

Es wurden daher schon Vorschläge gemacht, um ein Abschrauben der Gewürzmühle vom Glas zu verhindern. Solche Gewürzmühlen weisen die eingangs beschriebenen Merkmale auf.

Nach einem dieser Vorschläge gemäß der WO 2011/067736 A1 sollen die beiden zusammenwirkenden Vorsprünge im gesperrten Zustand mit ihren zueinander gerichteten Flächen face-to-face aneinander liegen. Beim Aufschrauben der Gewürzmühle auf das Glas ist es notwendig, dass der Vorsprung an der Gewürzmühle über den Vorsprung am Glas darüberschnappt, was eine große Verformung des auf den aufzuschraubenden Teil der Gewürzmühle erfordert. Eine vergleichbare Gewürzmühle ist auch aus der CH 703 351 A1 bekannt.

Bei einem solchen System ergibt sich, dass einerseits die Rückdrehsicherung bei kleinen Gläsern an der unteren Toleranzgrenze keinen ausreichenden Aufdrehschutz bietet, anderseits bei großen Gläsern an der oberen Toleranzgrenze die Mühlen (und Verschlüsse im allgemeinen) kaum auf die Gläser aufzuschrauben sind, da die notwendige Verformung für das "überschnappen" der Rückdrehsicherung dem Kunststoffteil sehr viel Verformung und Dehnung abverlangt. Das verlangt enorme Montage-Drehmomente. Um die großen Drehmomente mittels Kraftschluss-Reibung vom Schraubkopf der Abfüllanlage auf die Mühlen übertragen zu können, müssen die Schraubköpfe entsprechend stark zupacken, was wiederum der notwendigen Verformung der Mühle entgegenwirkt.

Die Erfindung hat es sich zum Ziel gesetzt, die Nachteile der bekannten starren Systeme zu vermeiden und ein neues dynamisches System zu schaffen.

Erreicht wird dies bei einer Gewürzmühle der eingangs genannten Art dadurch, dass der am aufzuschraubenden Teil der Gewürzmühle angeordnete Vorsprung ein federnder Arm ist, so dass beim Aufschrauben des Teils beim Vorbeibewegen des federnden Armes am Vorsprung sich der Arm um einen gedachten Drehpunkt federnd nach außen bewegt und über den rampenartigen Vorsprung gleitet.

Beim Aufschrauben einer erfindungsgemäß ausgebildeten Gewürzmühle gleitet der federnde Arm problemlos über den Vorsprung am Glas, schnappt anschließend zurück und sperrt sicher ein Zurückdrehen der Gewürzmühle.

Bei einer besonders zweckmäßigen Ausführungsform der Erfindung weist der federnde Arm eine am Vorsprung des Glases anliegende und bei versuchter Rückdrehung am Vorsprung des Glases gleitende Kontaktkante auf.

Zur Bildung der Kontaktkante ist bei einem bevorzugten Ausführungsbeispiel der federnde Arm schräg abgeschnitten.

Der federnde Arm kann durch eine Feder nach innen gedrängt werden. Zweckmäßig ist jedoch der federnde Arm einstückig mit dem aufzuschraubenden Teil der Gewürzmühle ausgebildet.

Die Erfindung betrifft auch eine Einheit umfassend eine erfindungsgemäße Gewürzmühle und ein Glas mit mindestens einem nach außen ragenden Vorsprung, der mit dem federnden Arm zusammenwirkt.

Nachstehend ist die Erfindung anhand eines in den Zeichnungen dargestellten Ausführungsbeispieles näher beschrieben, ohne auf dieses Beispiel beschränkt zu sein. Dabei zeigen:
Fig. 1a eine Ansicht, teilweise geschnitten, einer erfindungsgemäßen Gewürzmühle;
Fig. 1b eine Explosionszeichnung der Gewürzmühle nach Figur 1a;
Fig.2 den Unterteil der Gewürzmühle im Schnitt;
Fig. 3 den Unterteil nach Fig. 2 in Untersicht;
Fig. 4 den oberen Teil des Glases, auf den der Unterteil nach den Fig. 2 und 3 aufgeschraubt wird, in Ansicht;
Fig. 5 die Draufsicht auf den Unterteil nach Fig. 4;
Fig. 6 eine schematische Darstellung des Zusammenwirkens von Unterteil und Glas beim Aufschrauben des Unterteiles;
Fig. 7 eine schematische Darstellung des Zusammenwirkens von Unterteil und Glas nach beendetem Aufschrauben und
Fig. 8 eine schematische Darstellung des Versuches zum Abschrauben des Unterteiles vom Glas.

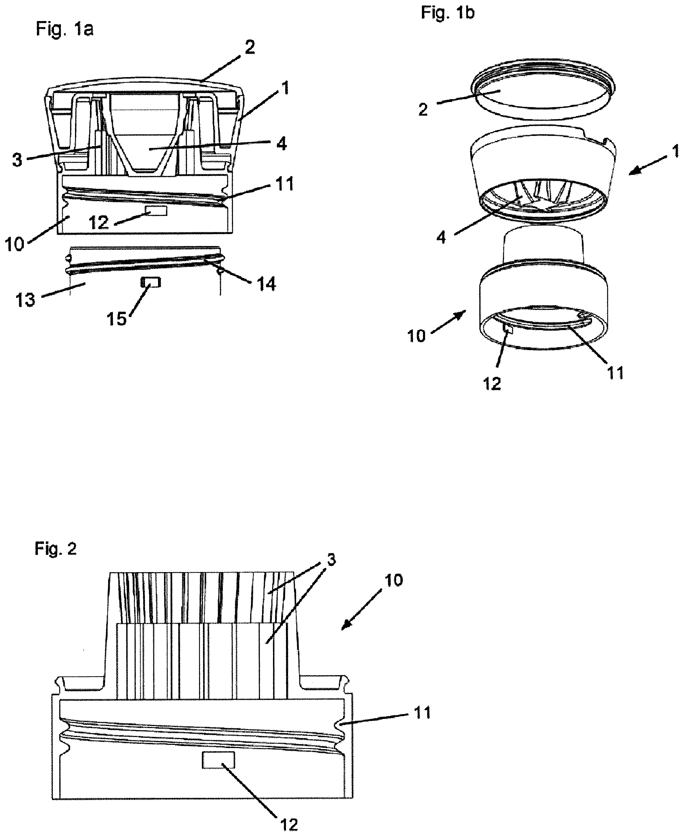

Gemäß den Fig. 1a und 1b besteht eine Gewürzmühle aus einem Oberteil 1 und einem Unterteil 10. Auf den Oberteil 1 ist eine Kappe 2 aufgesetzt. Der Oberteil 1 und der Unterteil 10 sind miteinander drehbar verbunden, der Unterteil 10 ist mittels eines Muttergewindes 11 auf ein mit einem Gewinde 14 versehenes Glas 13 aufschraubbar. Der Unterteil 10 ist mit Zähnen 3, der Oberteil 1 mit damit zusammenwirkenden Zähnen 4 versehen.

Beim Gebrauch wird die Kappe 2 abgenommen, das mit Gewürz gefüllte Glas 13 mit der darauf befindlichen Gewürzmühle um 180° gedreht und Oberteil 1 und Unterteil 10 gegeneinander verdreht. Dadurch wird das Gewürz durch die Zähne 3 und 4 gemahlen bzw. geschnitten.

Damit die Gewürzmühle, insbesondere der Unterteil 10, vom Glas 13 nach dem Aufschrauben nicht mehr abgeschraubt werden kann, ist die nachstehend beschriebene erfindungsgemäße Ausgestaltung vorgesehen.

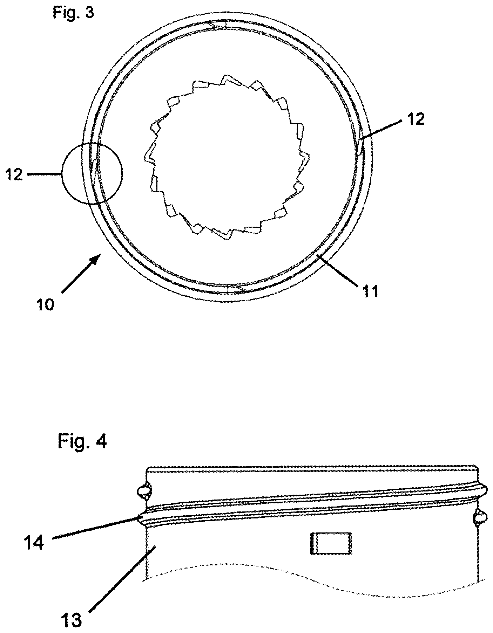

Nach den Fig. 2 und 3 ist am Unterteil 10 mit dem Muttergewinde 11 mindestens ein, im Beispiel zwei, nach innen ragender federnder Arm 12 angeordnet, der mit einem rampenartigen Vorsprung 15 am Glas 13, das mit einem Gewinde 14 versehen ist, zusammenwirkt.

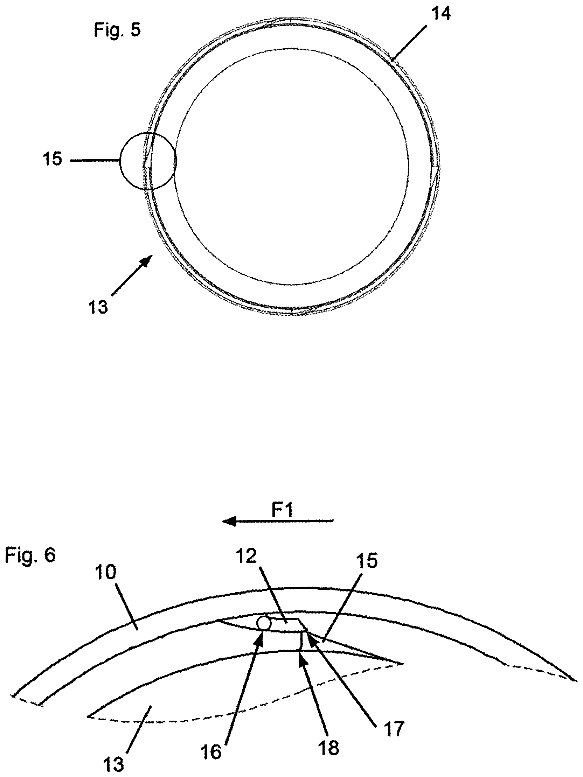

Das Zusammenspiel von Vorsprung 15 und Arm 12 beim Aufschrauben des Unterteiles 10 auf das Glas 13 bzw. beim versuchten Abschrauben ist in den Fig. 6 bis 8 schematisch dargestellt.

Gemäß Fig. 6 wird beim Aufschrauben des Unterteiles 10 in Richtung des Pfeiles F1 beim Vorbeibewegen des federnden Armes 12 am Vorsprung 15 sich der Arm 12 um den gedachten Drehpunkt 16 federnd nach außen bewegen und über den rampenartigen Vorsprung 15 gleiten.

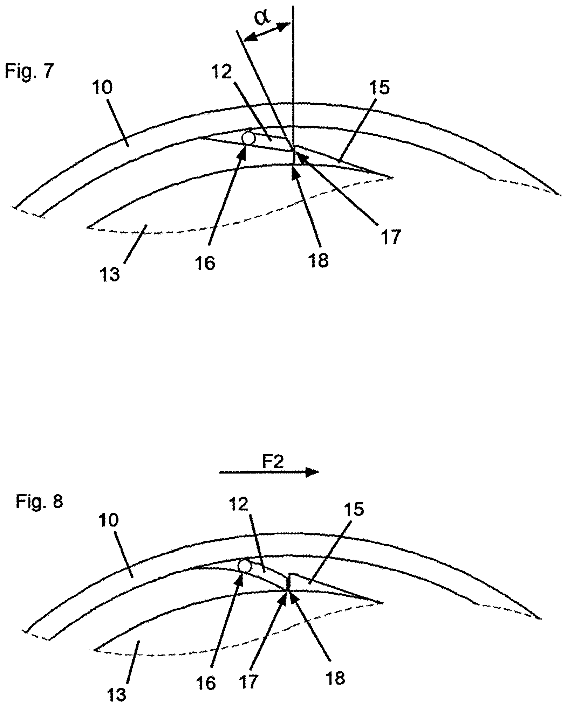

Nach Ende dieser Bewegung schnappt der federnde Arm 12 wieder nach innen und der mit einer Kontaktkante 17 ausgestattete federnde Arm 12 liegt an der Stirnseite des Vorsprunges 15 an (Fig. 7).

Die Kontaktkante 17 wurde dadurch geschaffen, dass der einstückig mit dem Unterteil 10 ausgebildete Arm 12 um den Winkel α schräg abgeschnitten ist.

Beim versuchten Aufschrauben in Richtung des Pfeiles F2 gleitet die Kontaktkante 17 entlang des Vorsprunges 15 bis zur Ecke 18 und sperrt so eine weitere Rückbewegung (Fig. 8).

Im Rahmen der Erfindung sind zahlreiche Abänderungen möglich. So wäre die Anordnung von mehr Vorsprüngen 15 am Glas 13 und mehr federnden Armen 12 am Unterteil 10 denkbar. Auch könnte das erfindungsgemäße dynamische Prinzip auch bei anderen Behältern mit Schraubverschluß angewendet werden.

## Patentansprüche

1. Gewürzmühle, die auf ein das Gewürz enthaltendes Glas (13) aufzuschrauben ist, wobei das Glas (13) mindestens einen nach außen ragenden Vorsprung (15) aufweist, der mit einem an dem aufzuschraubenden Teil (10) der Gewürzmühle nach innen ragenden Vorsprung (12) derart zusammenwirkt, dass nach dem Bewegen der beiden Vorsprünge (12, 15) aneinander vorbei beim Aufschrauben der Gewürzmühle auf das Glas (13) ein Rückdrehen gesperrt ist, **dadurch gekennzeichnet, dass** der am aufzuschraubenden Teil (10) der Gewürzmühle angeordnete Vorsprung ein federnder Arm (12) ist, so dass beim Aufschrauben des Teils (10) beim Vorbeibewegen des federnden Armes (12) am Vorsprung (15) sich der Arm (12) um einen gedachten Drehpunkt (16) federnd nach außen bewegt und über den rampenartigen Vorsprung (15) gleitet.

2. Gewürzmühle nach Anspruch 1, **dadurch gekennzeichnet, dass** der federnde Arm (12) eine am Vorsprung (15) des Glases (13) anliegende und bei versuchter Rückdrehung am Vorsprung (15) des Glases (13) gleitende Kontaktkante (17) aufweist.

3. Gewürzmühle nach Anspruch 2, **dadurch gekennzeichnet, dass** zur Bildung der Kontaktkante (17) der federnde Arm (12) schräg abgeschnitten ist.

4. Einheit umfassend eine Gewürzmühle nach einem der Ansprüche 1 bis 3 und ein Glas (13) mit mindestens einem nach außen ragenden Vorsprung (15), der mit dem federnden Arm (12) zusammenwirkt.

## Claims

1. A spice grinder adapted to be screwed on a glass (13) containing the spice, wherein the glass (13) comprises at least one outwardly projecting protrusion (15) cooperating with an inwardly projecting protrusion (12) provided on the part (10) of the spice grinder which is to be screwed on, such that after the moving of the two protrusions (12, 15) past each other during the screwing of the spice grinder on the glass (13) back-rotation is blocked, **characterized in that** the protrusion arranged on the part (10) of the spice grinder which is to be screwed on is a resilient arm (12), so that during the screwing of the part (10), as the resilient arm (12) moves past the protrusion (15), the arm (12) moves about an imagined centre of rotation (16) resiliently outward and slides over the ramp-like protrusion (15).

2. The spice grinder according to claim 1, **characterized in that** the resilient arm (12) comprises a contact edge (17) resting against the protrusion (15) of the glass (13) and sliding on the protrusion (15) of the glass (13) if back-rotation is attempted.

3. The spice grinder according to claim 2, **characterized in that,** for forming the contact edge (17), the resilient arm (12) is cut off obliquely.

4. A unit comprising a spice grinder according to any of claims 1 to 3 and a glass (13) comprising at least one outwardly projecting protrusion (15) cooperating with the resilient arm (12).

## Revendications

1. Moulin à épices, qui est à visser sur un verre (13) contenant l'épice, dans lequel le verre (13) présente au moins une partie faisant saillie (15) dépassant vers l'extérieur, laquelle coopère avec une partie faisant saillie (12) dépassant vers l'intérieur sur la partie (10) à visser du moulin à épices de telle manière qu'après le déplacement des deux parties faisant saillie (12, 15) le long l'une de l'autre une rotation en sens inverse est bloquée lors du vissage du moulin à épices sur le verre (13), **caractérisé en ce que** la partie faisant saillie disposée sur la partie (10) à visser du moulin à épices est un bras (12) élastique de sorte que le bras (12) se déplace vers l'extérieur élastique autour d'un point de rotation (16) imaginaire et glisse au-dessus de la partie faisant saillie (15) de type rampe lors du vissage de la partie (10) lors du déplacement du bras (12) élastique le long de la partie faisant saillie (15).

2. Moulin à épices selon la revendication 1, **caractérisé en ce que** le bras (12) élastique présente une arête de contact (17) reposant sur la partie faisant saillie (15) du verre (13) et glissant, lors d'une tentative de rotation en sens inverse, sur la partie faisant saillie (15) du verre (13).

3. Moulin à épices selon la revendication 2, **caractérisé en ce que** le bras (12) élastique est découpé à l'oblique afin de former l'arête de contact (17).

4. Unité comprenant un moulin à épices selon l'une des revendications 1 à 3 et un verre (13) avec au moins une partie faisant saillie (15) dépassant vers l'extérieur, laquelle coopère avec le bras (12) élastique.
